# EUROPEAN PATENT APPLICATION

(11) **EP 4 559 857 A1**
(43) Date of publication of application: **28.05.2025**
(21) Application number: 23842303.2
(22) Date of filing: 18.07.2023
(51) Int. Cl.: B66C 1/12, B66C 1/14, B66C 13/08, B66C 13/16, B66C 13/18

(54) **STEEL LINING MODULE CONSTRUCTION METHOD, HOISTING TOOL AND LIMITING TOOL**

(30) Priority: 19.07.2022 CN 202210846191
(71) Applicant: China Nuclear Power Engineering Co., Ltd., Shenzhen, Guangdong 518124 (CN); China General Nuclear Power Corporation, Shenzhen, Guangdong 518028 (CN); CGN Power Co., Ltd., Shenzen, Guangdong 518028 (CN)
(72) Inventor: CAO, Zhiyi, Shenzhen, Guangdong 518124 (CN); SUN, Zuoxiao, Shenzhen, Guangdong 518124 (CN); LING, Hongji, Shenzhen, Guangdong 518124 (CN); GE, Chunlei, Shenzhen, Guangdong 518124 (CN); FU, Qi, Shenzhen, Guangdong 518124 (CN)
(74) Representative: Greaves Brewster LLP
(86) International application number: PCT/CN2023/107892
(87) International publication number: WO 2024/017240

(57) **Abstract**

Provided are a steel lining module construction method, a hoisting tool (100) and a limiting tool (130). The steel lining module construction method comprises: assembling a bottom plate (10), a first truncated cone (30) and a second truncated cone (40) together to form a steel lining module (1); arranging first hoisting points (103) on the steel lining module (1); connecting the first hoisting points (103) on the steel lining module (1) to the hoisting tool (100), and connecting the hoisting tool (100) to a hoisting apparatus (120); and hoisting the steel lining module (1) into a containment in a nuclear island reactor building. By means of the construction method, the overall assembly of the module and the civil engineering of the containment and the construction of an internal structure are independent from each other, so that cross-operation risk is reduced, thereby shortening the construction progress, and improving the construction management safety quality.

## Description

### CROSS-REFERENCE TO RELATED APPLICATIONS

This application claims priority of Chinese Patent Application No. 2022108461918, filed on July 19, 2022, entitled "STEEL LINING MODULE CONSTRUCTION METHOD, HOISTING TOOL AND LIMITING TOOL", the entire content of which is incorporated herein by reference in its entirety.

### TECHNICAL FIELD

The present application relates to the technical field of construction of a steel lining of a containment vessel of a nuclear island reactor building, and in particular to a construction method for a steel lining module, a hoisting tool, and a limiting tool.

### BACKGROUND

As part of the third safety barrier of a nuclear island, a steel lining is configured to prevent the leakage of radioactive ions. The steel lining is located an inner side of a containment vessel in a nuclear island reactor building and is connected to an internal structure of the nuclear island. The steel lining of the nuclear island consists of four parts: a bottom plate, a truncated cone, a cylinder, and a dome.

Conventional steel lining is constructed by sequentially lapping the bottom plate, the truncated cone, the internal structure of the nuclear island, a containment foundation, the truncated cone, the cylinder, a civil structure and a steel structure. However, since the bottom plate of the steel lining and the truncated cone in the current project are on a critical path of nuclear island construction, the complex structure of the steel lining itself, the heavy workload of on-site welding, and the need for 100% radiographic testing (RT testing) of the weld seam, which makes the on-site construction and safety and quality control face a great challenge.

Therefore, the above-mentioned method is adopted to construct the steel lining of the current project, although the safety and quality risks are controllable, since the steel structure and civil construction path are both the critical path of progress, the steel structure construction and civil construction are overlapped with each other, there is a certain degree of cross operation, which has a great impact on the construction period. Certainly, in related technologies, on the basis of conventional construction, the cylinder is assembled and hoisted as an integral module, which brings convenience to the construction of structure above the containment foundation and cylinder section, but the assembly of the bottom plate and the construction of truncated cone still affect the construction of the internal structures of the containment vessel and reactor building. A construction period of the bottom plate and the truncated cone is about 4 months, which greatly affects the construction progress.

To sum up, the construction method for the steel lining in the related art has the defect of great influence on the construction period due to cross operation.

### SUMMARY

According to various embodiments of the present application, a construction method for a steel lining module, a hoisting tool, and a limiting tool are provided.

According to a first aspect, the present application provides a construction method for a steel lining module, the steel lining module includes a bottom plate, a first truncated cone, and a second truncated cone that are sequentially connected, the method includes the following steps of:
splicing the bottom plate, the first truncated cone and the second truncated cone to form the steel lining module;
arranging first hoisting points on the steel lining module;
connecting the first hoisting points on the steel lining module to a hoisting tool, and connecting the hoisting tool to a hoisting apparatus; and
hoisting the steel lining module into a containment vessel in a nuclear island reactor building.

In one of the embodiments, the arranging the first hoisting points on the steel lining module includes:
arranging a plurality of groups of first hoisting points sequentially from a center outwards along a radial direction of the steel lining module, wherein each group of first hoisting points includes a plurality of first hoisting points spaced apart in a circumferential direction of the steel lining module.

In one of the embodiments, connecting lines of the first hoisting points in the plurality of groups of the first hoisting points form a plurality of concentric circles, the concentric circles and a distance between any two adjacent first hoisting points in a same group of the first hoisting points satisfy at least one of the following conditions: differences between radii of any two adjacent concentric circles are equal, and distances between any two adjacent first hoisting points in a same group of first hoisting points are the same.

In one of the embodiments, an edge of the bottom plate is welded to one end of the first truncated cone in an axial direction, the other end of the first truncated cone in the axial direction extends in a direction away from the bottom plate and is welded to the second truncated cone, and an edge of the second truncated cone away from the first truncated cone extends away from the first truncated cone in a radial direction of the first truncated cone;
the plurality of groups of the first hoisting points are provided on the bottom plate, and at least one group of the first hoisting points is provided on a top portion of the second truncated cone.

In one of the embodiments, the arranging the first hoisting points on the steel lining module further includes a verification step of:
simulating stresses of the first hoisting points during a hoisting process through finite element analysis to determine a stress and a strain of the steel lining module, so as to verify whether stresses and strains of the first hoisting point satisfy a preset condition, thereby determining whether a position arrangement of the first hoisting points is reasonable.

In one of the embodiments, the simulating stresses of the first hoisting points during the hoisting process through finite element analysis to determine the stress and strain of the steel lining module includes:
simulating the stresses of the first hoisting points under a first hoisting condition and a second hoisting condition through finite element analysis, wherein in the first hoisting condition, the first hoisting points on the steel lining module are subjected to a same stress, in the second hoisting condition, the first hoisting points on the steel lining module has a maximum-stress hoisting point and a minimum-stress hoisting point, a stress of the maximum-stress hoisting point is less than or equal to 10% of the stress of the first hoisting point in the first condition, and a stress of the minimum-stress hoisting point is greater than or equal to 10% of the stress of the first hoisting point in the first condition; and
determining the stress and the strain of the steel lining module under two hoisting conditions according to the stresses of the first hoisting points under the first hoisting condition and the second hoisting condition.

In one of the embodiments, the determining the stress and strain of the steel lining module under the two hoisting conditions according to the stresses of the first hoisting points under the first hoisting condition and the second hoisting condition includes:
determining the stress and the strain of the steel lining module according to the stresses of the first hoisting points on the steel lining module and a wind load, a dynamic load coefficient and an unbalance coefficient of the steel lining module.

In one of the embodiments, the method further includes:
obtaining the wind load of the steel lining module according to preset parameters of the steel lining module, wherein the preset parameters include a height of the steel lining module, a diameter of the steel lining module, a maximum hoisting value of the steel lining module, and a wind speed and a wind coefficient of an environment where the steel lining module is located.

In one of the embodiments, after the verification step, the method further includes:
preparing a simulated workpiece and adhering a strain gauge at a specified position;
checking a flatness of the simulated workpiece, measuring coordinates of a point to be detected before hoisting, and zeroing the strain gauge;
hoisting the simulated workpiece, maintaining a prohibited state for not less than 10 minutes when a distance between the simulated workpiece and a platform ranges from 0.1m to 0.5m, measuring the coordinates of the point to be detected, and continuously collecting data of the strain gauge; and
lowering the simulated workpiece onto the platform and ending data acquisition of the strain gauge, and checking the flatness of the simulated workpiece again.

In one of the embodiments, the simulated workpiece includes:
a first simulated workpiece being a rectangular steel plate;
a second simulated workpiece being a rectangular steel plate, wherein a peripheral edge of the second simulated workpiece is provided with a limiting frame;
wherein a thicknesses of the first simulated workpiece and a thicknesses of the second simulated workpiece are consistent with a thickness of the bottom plate, a plurality of points to be detected are provided on both the first simulated workpiece and the second simulated workpiece, a number of the points to be detected on the first simulated workpiece is the same as a number of the points to be detected on second simulated workpiece, and a distribution of the points to be detected is consistent with a distribution of the first hoisting point having the maximum stress on the bottom plate.

In one of the embodiments, when the first hoisting points on the steel lining module are connected to the hoisting tool and the hoisting tool is connected to the hoisting apparatus,
the first hoisting point is connected to the hoisting tool through a first sling, the first sling includes a first turnbuckle, a rope loop, and a first shackle that are sequentially connected, wherein the first turnbuckle is connected to the hoisting tool, and the first shackle is connected to the first hoisting point;
the hoisting tool is connected to the hoisting apparatus through a second sling, the second sling includes a hook, a rope, a second shackle, and a second turnbuckle that are sequentially connected, wherein the hook is connected to the hoisting apparatus, and the second turnbuckle is connected to the hoisting tool.

According to a first aspect, the present application provides a hoisting tooling, the hoisting tool is used in the aforementioned construction method for the steel lining module, all of the first hoisting points on the steel lining module are connected to the hoisting tool, and the hoisting tool is connected to the hoisting apparatus.

In one of the embodiments, the hoisting tool includes:
a hoisting body;
a plurality of second hoisting points provided on one side of the hoisting body and configured to be connected to the hoisting apparatus; and
a plurality of third hoisting points provided on the other side of the hoisting body, wherein the plurality of third hoisting points correspond to the first hoisting points on the steel lining module, and the third hoisting points are configured to be connected to the first hoisting points.

In one of the embodiments, the hoisting body includes:
a plurality of first connecting rods, the plurality of first connecting rods being sequentially connected end to end to form a circular first connecting frame, and a plurality of first connecting frames being spaced apart and concentrically arranged in a same plane.
a plurality of second connecting rods, the plurality of second connecting rods being sequentially connected end to end to form a circular second connecting frame, a plurality of second connecting frames being spaced apart and concentrically arranged in another same plane, and the first connecting rods and the second connecting rods being spaced apart;
a plurality of support rods, wherein each support rod satisfies at least one of the following conditions:
two tends of the support rod are detachably connected to the ends of the first connecting rods on the two adjacent first connecting frames, respectively;
two ends of the support rod are detachably connected to ends of a second connecting rod on the two adjacent second connecting frames, respectively; and
two ends of the support rod are detachably connected to ends of the first connecting rod and the second connecting rod, respectively.

In one of the embodiments, the hoisting tool further includes a plurality of connecting members, and the connecting members is provided with a plurality of connecting holes, the plurality of connecting holes satisfy at least one of the following conditions:
two first connecting rods are detachably connected in two connecting holes on a same connecting member, respectively;
two second connecting rods are detachably connected in two connecting holes on a same connecting member, respectively;
the first connecting rod and the support rod are detachably connected in two connecting holes on a same connecting member, respectively; and
the second connecting rod and the support rod are detachably connected in two connecting holes on a same connecting member, respectively.

In one of the embodiments, at least twelve second hoisting points are provided, and the second hoisting points are provided on the first connecting frame;
the third hoisting points are arranged on the second connecting frame, and the third hoisting points satisfy at least one of the following conditions:
the third hoisting points on the second connecting frame are in one-to-one correspondence with the first hoisting points on the bottom plate; and
one third hoisting point on the second connecting frame corresponds to two second hoisting points.

According to a first aspect, the present application provides a limiting tool, which is configured to limit a steel lining module in the aforementioned construction method for the steel lining module.

In one of the embodiments, the limiting tool includes:
a circumferential limiting member, one end of the circumferential limiting member being fixed on an outer side surface of the first truncated cone, and the other end of the circumferential limiting member extending in a direction away from the first truncated cone; and
an axial limiting member, one end of the axial limiting member being fixed on a ground in a nuclear island building, and the other end of the axial limiting member extends upwards;
wherein opposite surfaces of the circumferential limiting member and the axial limiting member are in contact with each other to determine the position of the steel lining module.

In one of the embodiments, the limiting tool further includes a support column, one end of the support column is fixed on a ground in the nuclear island reactor building, and the other end of the support column extends towards the second truncated cone and abuts against an edge of the second truncated cone.

Details of one or more embodiments of the present application are set forth in the following drawings and descriptions. Other features, objects and advantages of the present application will become apparent from the description, drawings, and claims.

### BRIEF DESCRIPTION OF THE DRAWINGS

To illustrate the technical solutions in the embodiments of the present application or in the prior art more clearly, the accompanying drawings for describing the embodiments or the prior art are introduced briefly in the following. Apparently, the accompanying drawings in the following description are only some embodiments of the present application, and persons of ordinary skill in the art can derive other drawings from the accompanying drawings without creative efforts.
FIG. 1 is a flowchart of a construction method for a steel lining module according to example 1 of the present application.
FIG. 2 is a schematic view of assembling a bottom plate in the construction method for the steel lining module according to example 1 of the present application.
FIG. 3 is a structural schematic view of a steel plate counterweight block used for counterweight when assembling a bottom plate in the construction method for the steel lining module according to example 1 of the present application.
FIG. 4 is a structural schematic view of a concrete counterweight block used for counterweight when assembling a bottom plate in the construction method for the steel lining module according to embodiment 1 of the present application.
FIG. 5 is a schematic view of distribution of the counterweight blocks along a weld seam of the bottom plate when assembling a bottom plate in the construction method for the steel lining module according to example 1 of the present application.
FIG. 6 is a schematic view of distribution of the counterweight blocks on an entire bottom plate when assembling of the bottom plate in the construction method for the steel lining module according to example 1 of the present application.
FIG. 7 is a schematic view showing a support column connected to a second truncated cone and a ground of a nuclear island reaction building in the construction method for the steel lining module to example 1 of the present application.
FIG. 8 is a schematic view showing a reinforcing rib connected to a first truncated cone and a second truncated cone in the construction method for the steel lining module according to example 1 of the present application.
FIG. 9 is a schematic view showing a bottom plate and a first truncated cone abutting against a reinforcing plate when being welded in the construction method for the steel lining module according to example 1 of the present application.
FIG. 10 is a structural schematic view of a temporary platform for assembling a bottom plate in the construction method for the steel lining module according to example 1 of the present application.
FIG. 11 is a schematic view of an arrangement of first hoisting points on the steel lining module in the construction method for the steel lining module according to example 2 of the present application.
FIG. 12 is an overall stress diagram of the steel lining module subjected to finite element analysis in a hoisting process in the construction method of steel lining module according to example 3 of the present application.
FIG. 13 is another overall stress diagram of the steel lining module subjected to finite element analysis in a hoisting process in the construction method of steel lining module according to example 3 of the present application.
FIG. 14 is an overall displacement diagram of the steel lining module subjected to finite element analysis in a hoisting process in the construction method for the steel lining module according to example 3 of the present application.
FIG. 15 is another overall displacement diagram of the steel lining module subjected to finite element analysis in a hoisting process in the construction method for the steel lining module according to example 3 of the present application.
FIG. 16 is a structural schematic view of a first simulated workpiece in the construction method for the steel lining module according to example 4 of the present application.
FIG. 17 is a structural schematic view of a second simulated workpiece in the construction method for the steel lining module according to example 4 of the present application.
FIG. 18 is a stress diagram of a first simulated workpiece after being performed by finite element analysis in the construction method for the steel lining module according to example 4 of the present application.
FIG. 19 is a stress diagram of a second simulated workpiece after being performed by finite element analysis in the construction method for the steel lining module according to example 4 of the present application.
FIG. 20 is a displacement diagram of a first simulated workpiece after being performed by finite element analysis in the construction method for the steel lining module according to example 4 of the present application.
FIG. 21 is a displacement diagram of a second simulated workpiece after being performed by finite element analysis in the construction method for the steel lining module according to example 4 of the present application.
FIG. 22 is a schematic view showing a sling being connected in the construction method for the steel lining module according to example 4 of the present application.
FIG. 23 is a structural schematic view of a first sling in the construction method for the steel lining module according to example 4 of the present application.
FIG. 24 is a schematic view showing a hoisting tool connected to and a hoisting apparatus according to example 5 of the present application.
FIG. 25 is a schematic view of sticking positions of strain gauges on a first connecting rod of a hoisting tool according to example 5 of the present application.
FIG. 26 is a schematic view of sticking positions of strain gauges on a second connecting rod of a hoisting tool according to example 5 of the present application.
FIG. 27 is a schematic view of sticking positions of strain gauges on a support rod of a hoisting tool according to example 5 of the present application.
FIG. 28 is a schematic view showing a limiting tool connected to a steel lining module according to example 6 of the present application.
FIG. 29 is another schematic view showing a limiting tool connected to a steel lining module according to example 6 of the present application.

### Steps S1-S4.

Steel lining module 1
Bottom plate 10, Steel plate 101, Weld 102, First hoisting point 103.
Counterweight 20, Steel plate counterweight 201, Concrete counterweight 202.
First truncated cone 30, Vertical reinforcing plate 301.
Second truncated cone 40.
Support column 50.
Nuclear island building ground 60.
Reinforcing rib 70.
Assembly platform 80.
Simulated workpiece 90, First simulated workpiece 901, Point 902 to be detected 902, Second simulated workpiece 903, Frame 9031.
Hoisting tool 100, First connecting rod 1001, Second connecting rod 1002, Support rod 1003.
First sling 110.
Hoisting apparatus 120.
Limiting tool 130, Circumferential limiting member 1301, Radial limiting member 1302, Guide limiting member 1303.

### DETAILED DESCRIPTION OF THE EMBODIMENTS

In order to make the above objectives, features and advantages of the present application clear and easier to understand, the specific embodiments of the present application are described in detail below in combination with the accompanying drawings. Many specific details are set forth in the following description to facilitate a full understanding of the present application. However, the present application can be implemented in many ways different from those described herein, and those skilled in the art can make similar improvements without departing from the connotation of the present application. Therefore, the present application is not limited by the specific embodiments disclosed below.

In the description of the present application, it should be understood that the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential direction" are based on the azimuths or position relationships shown in the attached drawings. These terms are only for the convenience of describing the present application and simplifying the description, rather than indicating or implying that the indicated devices or elements must have the specific azimuths, or be constructed or operated in the specific azimuths, and therefore such terms cannot be understood as limitations of the present application.

In addition, the terms "first" and "second" are only used for descriptive purposes and cannot be understood as indicating or implying relative importance or implicitly indicating the number of indicated technical features. Thus, the features defined with "first" and "second" may explicitly or implicitly include at least one of the features. In the description of the present application, "a plurality of" means at least two, such as two, three, etc., unless otherwise expressly and specifically defined.

In the present application, unless otherwise expressly specified and limited, the terms "mount", "connect", "couple", "fix" and the like should be interpreted broadly. For example, the terms can mean fixed connection, detachable connection, or being integrated. The terms can mean mechanical connection or electrical connection. The terms can mean directly connection or indirectly connection through an intermediate medium. The terms can mean connection within two elements or interaction relationship between two elements, unless otherwise expressly limited. For those skilled in the art, the specific meaning of the above terms in the present application should be understood according to the specific situation.

In the present application, unless otherwise expressly specified and limited, a first feature "above" or "below" a second feature may be in direct contact with the second feature, or the first and second features may be in indirect contact through an intermediate medium. Moreover, the first feature "above" the second feature may be right above or obliquely above the second feature, or the first feature may be merely located at a height higher than the second feature. The first feature "below" the second feature may be right below or obliquely below the second feature, or the first feature may be merely located at a height lower than that of the second feature.

It should be noted that when an element is called "fixed to" or "provided on" another element, it can be directly on another element or there can be an intermediate element. When an element is considered to be "connected" to another element, it can be directly connected to another element or there can be an intermediate element. The terms "vertical", "horizontal", "up", "down", "left", "right" and similar expressions used herein are for the purpose of illustration only and do not represent the only ways for implementation.

### Example 1

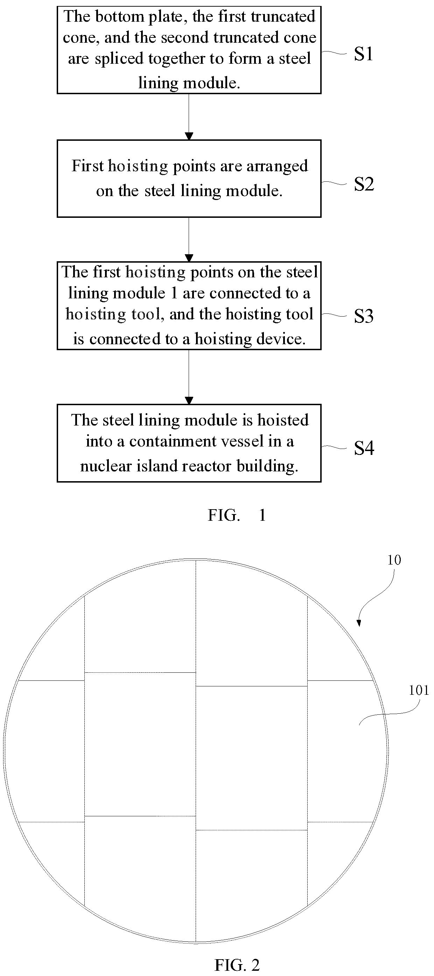

Referring to FIG. 1, FIG. 1 shows a flowchart of a construction method for a steel lining module according to example 1 of the present application. It should be understood that although steps in the flowchart shown in FIG. 1 are shown sequentially as indicated by arrows, the steps are not necessarily performed sequentially in a order indicated by the arrows. Unless explicitly described herein, the steps are performed in no particular order and may be performed in other orders. Moreover, at least a part of the steps in FIG. 1 may include a plurality of sub-steps or a plurality of stages, which are not necessarily performed at the same time, but may be performed at different times, and the step is not necessarily performed once, but may be performed in turn or alternately with at least a part of other steps or sub-steps or stages of other steps. An embodiment of the present application provides a construction method for a steel lining module. The steel lining module 1 includes a bottom plate 10, a first truncated cone 30, and a second truncated cone 40 that are connected sequentially. The construction method for the steel lining module includes the following steps.

Step S1, the bottom plate 10, the first truncated cone 30, and the second truncated cone 40 are spliced together to form a steel lining module 1.

Step S2, first hoisting points 103 are arranged on the steel lining module 1.

Step S3, the first hoisting points 103 on the steel lining module 1 are connected to a hoisting tool 100, and the hoisting tool 100 is connected to a hoisting apparatus 120.

Step S4, the steel lining module 1 is hoisted into a containment vessel in a nuclear island reactor building.

In the above technical solution, the bottom plate 10, the first truncated cone 30, and the second truncated cone 40 are spliced into an integral module. The integral assembly process of the steel lining module 1 can be constructed on the ground, which can greatly reduce the workload of a critical path in a construction process of a civil structure and a steel structure. The steel lining module 1 is spliced and then hoisted into the containment vessel in the nuclear island reactor building for assembly, so that the overall assembly module, the civil containment, and an internal structure can be constructed independently, and the risk of cross operation is reduced. Meanwhile, two critical paths can be constructed simultaneously, thus shortening a construction period. Moreover, the assembly process is completed on the ground, which can improve the welding operation environment, and also improve the level of construction management safety quality.

A splicing manner of the bottom plate 10, the first truncated cone 30, and the second truncated cone 40 is not limited. In this embodiment, the bottom plate 10, the truncated cone 30, and the second truncated cone 40 are spliced together by welding. Since the bottom plate 10 is usually a thin-walled steel plate, a flatness and a deformation of the bottom plate 10 need to be controlled during assembly and hoisting.

In the conventional process, when the bottom plate 10 of the steel lining is constructed, a bottom portion of the bottom plate 10 is usually pre-built with a detection groove for RT detection, and the bottom plate 10 is divided into a plurality of pieces and welded in the detection groove. The detection groove can serve as a back support for assembling and welding the bottom plate 10, so as to reduce the deformation degree of welding.

However, by adopting the technical scheme of integrally assembling and then hoisting, the bottom plate 10 can be assembled at a special assembly site and then hoisted. A reserved channel for RT detection is provided at the assembly site itself. Therefore, the detection groove for RT detection is no longer arranged on the bottom plate 10, which leads to no anchor point on the bottom plate 10. Since no back support is provided on the bottom plate 10, the risk of welding deformation during assembly of the bottom plate 10 is greatly increased. The control of a flatness of the bottom plate 10 during the assembly stage is a source of a flatness control of the overall module of the steel lining.

Specifically, before splicing the bottom plate 10, the first truncated cone 30, and the second truncated cone 40, the bottom plate 10 needs to be spliced first. In this embodiment, as shown in FIG. 2, the bottom plate 10 is formed by splicing a plurality of steel plates. Certainly, the number of the steel plates is not limited, the number of the steel plates is controlled within 12 as far as possible, and a thickness of the steel plates is between 4 mm to 8 mm. In this embodiment, the bottom plate 10 includes twelve steel plates 101, and the steel plates 101 are made of a material with a model of P265GH and have a thickness of 6 mm. Twelve steel plates 101 are spliced together by welding to form the bottom plate 10 of the steel lining module 1. The spliced bottom plate 10 has a radius of 19.7 m and an area of 1219 m². Certainly, the shape and size of the spliced bottom plate may be determined according to the actual requirements. For example, the bottom plate may be circular or square, and the bottom plate has other sizes except the radius of 19.7 m. Compared with the sixteen steel plates 101 of the bottom plate 10 in the related art, the number of the steel plates 101 in the bottom plate 10 in the present scheme is reduced by four, so that the total length of a weld 102 in the assembly process is reduced by 71 m, and the welding deformation can be effectively reduced by reducing the length of the weld.

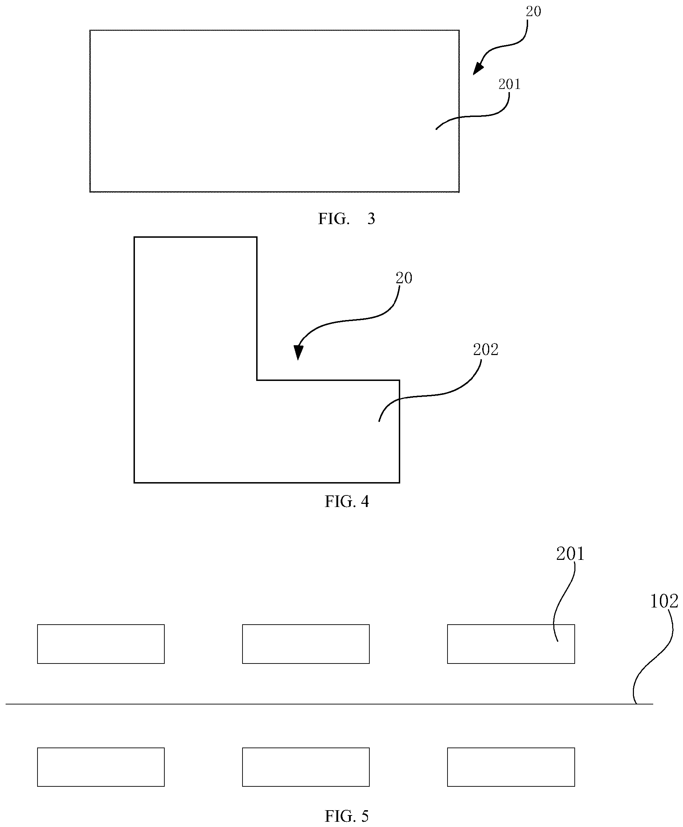

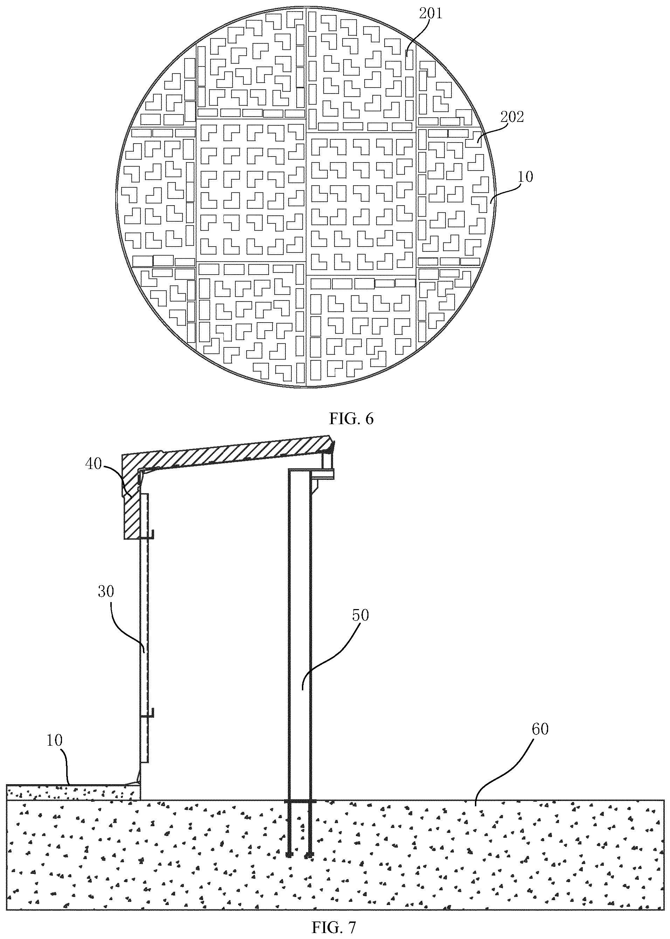

In addition, during the welding of the bottom plate 10, counterweight blocks 20 are provided on both sides of the weld 102 to reduce the risk of deformation during the welding. In this embodiment, a combination of four tons of concrete counterweight 202 and one ton of steel plate counterweight 201 is applied to press on a steel plate of the bottom plate 10. Specifically, one ton of steel plate counterweights 201 are used to press both sides of the abutting weld 102 of the two steel plates. Since the structure of the steel plate counterweight 201 is relatively simple, it is convenient to reserve an operation space for welding, thereby facilitating the welding by an operator. Four tons of concrete counterweight 202 can be used for counterweight at other locations except the abutting weld. As shown in FIG. 3, the steel plate counterweights 201 are steel plates having lengths of about 2 m and widths of about 0.74 m, and are spaced apart on both sides of the weld 102 along a longitudinal direction of the weld 102, and a longitudinal direction of the steel plate counterweight 201 is consistent with the longitudinal direction of the weld 102. In this embodiment, as shown in FIG. 5, a distance between the steel plate counterweight 201 and the weld 102 is approximately from 400 mm to 500 mm, and a distance between two adjacent weld 102 along the longitudinal direction of the weld 102 is no more than 1.4 meters. As shown in FIG. 6, on the steel plates of the bottom plate 10, except the positions of the splicing welds 102 of the two steel plates, other positions are weighted with concrete counterweights 202, and the concrete counterweight 202 are arranged substantially uniformly and spaced apart from each other on the steel plates of the bottom plate 10. In this embodiment, as shown in FIG. 4, the concrete KUAI is of an L-shaped structure. Specifically, the lengths of two long sides of the concrete counterweight 202 is approximately 1.6 meters, and the width thereof and the length of the other two short sides thereof are approximately 0.8 meters.

In an embodiment, an edge of the bottom plate 10 is welded to a bottom portion of one end of the first truncated cone 30. The shape of the first truncated cone 30 is substantially a cylindrical structure. The cross-section of the first truncated cone 30 may be circular, square, oval or other irregular shapes, as long as it is adapted to the shape of the bottom plate 10. In this embodiment, the bottom plate 10 is circular, and therefore the first truncated cone 30 has a cylindrical structure. The other end of the first truncated cone 30 extends in a direction away from the bottom plate 10. In this embodiment, the other end of the first truncated cone 30 extends upward from a surface of the bottom plate 10. The second truncated cone 40 is of a substantially annular structure. One end of the first truncated cone 30 away from the bottom plate 10, that is, a top end thereof, is welded to an inner edge of the second truncated cone 40, and an edge of the second truncated cone 40 away from the first truncated cone 30, that is, an outer edge of the second truncated cone 40, extends away from the first truncated cone 30 along a radial direction of the first truncated cone 30, so that the second truncated cone 40 forms a suspended structure on the entire structure of the steel lining module 1.

Further, as shown in FIG. 7, the steel lining module 1 further includes a support column 50, one end of which is fixed to the edge of the second truncated cone 40 away from the first truncated cone 30, and the other end of which is fixed to the ground in the nuclear island reactor building. By providing the support column 50 at the outer edge of the second truncated cone 40 to support the second truncated cone 40, the risk of deformation of the second truncated cone 40 is reduced. Specifically, in the embodiment, forty-eight support columns 50 are provided, and the forty-eight support columns 50 are uniformly and spaced apart along an outer circumference of the second truncated cone 40. The support column 50 includes a main channel steel, a connecting channel steel, and a support channel steel. A bottom portion of the main channel steel is fixed to the concrete ground in the nuclear island reactor building by bolts. A top portion of the main channel steel extends toward the second truncated cone 40. One end of the connecting channel steel is welded to the main channel steel, and the connecting channel steel is perpendicular to the main channel steel. One end of the support channel steel is welded to an end of the connecting channel steel away from the main channel steel, and the other end extends upwards. The support channel steel can be placed with a wedge a wedge for height adjustment. A height of the support column can be adjusted by increasing or reducing the wedge, so that the outer edge of the second truncated cone 40 is kept at the same height, thereby reducing the risk of deformation of the second truncated cone 40.

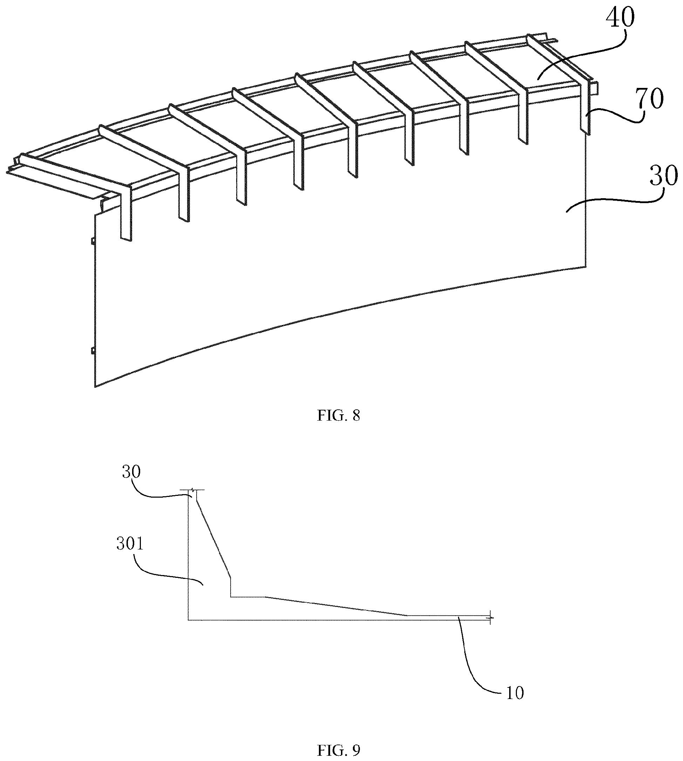

In this embodiment, in order to improve the strength of the second truncated cone 40, as shown in FIG. 8, a plurality of reinforcing ribs 70 are provided on an upper surface of the second truncated cone 40, and the plurality of reinforcing ribs 70 are spaced apart along a circumferential direction of the second truncated cone 40. The reinforcing rib 70 is of an L-shaped structure, and the reinforcing rib 70 is welded to a top surface of the second truncated cone 40 and a side surface of the first truncated cone 30. By welding the reinforcing rib 70 to the second truncated cone 40, not only the risk of deformation of the second truncated cone 40 is reduced, but also the hoisting requirement of the steel lining module 1 is satisfied.

In this embodiment, when the bottom plate 10 and the first truncated cone 30 are assembled, in order to enhance the connection strength between the bottom plate 10 and the first truncated cone 30, as shown in FIG. 9, a reinforcing plate is provided on an outer edge of the bottom plate 10, and a vertical reinforcing plate 301 is provided at a bottom portion of the first truncated cone 30. During welding, a position of the first truncated cone 30 is shifted outward by 3 mm to reduce an outer groove of an abutting groove between the first truncated cone 30 and the bottom plate 10, so that an outward shift of the vertical reinforcing plate 301 on the first truncated cone 30 after welding can be reduced, thereby reducing the welding deformation.

It should be noted that due to the large overall size of the steel lining module 1, the assembly of the overall module should be carried out in an area adjacent to the nuclear island site during assembly, and an assembly platform 80 should first satisfy higher flatness accuracy requirements to ensure the assembly flatness of the bottom plate 10. In addition, the assembly platform 80 should take into account the space requirement for RT detection, and a personnel passage should be reserved at the site assembly weld position to facilitate RT detection. Moreover, the assembly platform 80 is a temporary platform, which needs to be dismantled after the completion of modular construction, and the convenience of dismantling must be considered.

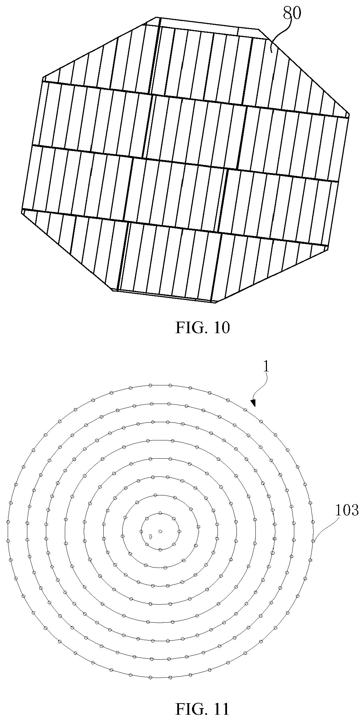

Based on the above on-site assembling requirements, as shown in FIG. 10, according to the embodiment, a semi-sunken module assembly platform 80 with RT detection is also designed. The assembly platform 80 adopts a structural form of a prefabricated concrete U-shaped groove, a non-structural material backfill, a concrete leveling layer, a steel structure keel support, and a steel plate leveling. The specific implementation scheme is as follows: according to an existing site elevation and a position of a personnel passage, the excavation is carried out to form a semi-sunken personnel passage, so as to reduce the backfilling amount. According to a position of a site passage, the U-shaped concrete groove is prefabricated in blocks and hoisted in place. Non-structural materials are used for backfilling between the passages and between the passages and a retaining wall of the assembly site. A concrete leveling layer of 100 mm is poured for leveling. A steel structure keel is mounted on the concrete leveling layer, and No. 10 channel steels with a spacing of 1m between channel steels is used. Steel plates with a thickness of 20 mm are intermittently welded on the steel structure keels to complete the final leveling. Through the steel structure keel support and the steel plate leveling, the flatness accuracy of the assembly platform 80 reaches 5mm/2m, and the assembly flatness requirement of the bottom plate 10 is satisfied. At the site splicing weld position, the assembly platform 80 is reserved with three-longitudinal and two-transverse pedestrian passage, and the prefabricated concrete U-shaped groove is adopted for the site splicing scheme to form the personnel passage. At the same time, prefabricated components also form a support structure system and a retaining wall structure of the platform, and the three-longitudinal and two-transverse pedestrian passage is reserved to greatly improve the RT detection efficiency. The semi-sunken design can reduce the elevation of the platform, reduce the backfilling workload, and has a fast construction speed and low cost. At the same time, the platform formed by prefabricated concrete components and backfill soil is more convenient for removal.

### Example 2

The steps and structure of this embodiment are substantially the same as those of example 1, and the differences are as follows:

In this embodiment, arranging the first hoisting points 103 on the steel lining module 1 includes, as shown in FIG. 11, arranging a plurality of groups of first hoisting points sequentially from a center outwards along a radial direction of the steel lining module. Each group of first hoisting points includes a plurality of first hoisting points 103 spaced apart in a circumferential direction of the steel lining module 1.

In this technical solution, by arranging a plurality of groups of first hoisting points 103 uniformly distributed on the steel lining module 1, the stress on the steel lining module 1 can be more uniformed, thereby reducing the risk of deformation of the steel lining module 1. A distribution form of each group of first hoisting points, the number of groups of first hoisting point groups, and the number of the first hoisting points 103 included in each group are not limited, and can be designed according to the specific structure and size of the steel lining. The first hoisting point 103 is a hoisting lug which is welded at a position where the first hoisting point 103 is required to be provided on the bottom plate 10 and is configured to be connected to a sling.

Specifically, as shown in FIG. 11, connecting lines of the first hoisting points in the plurality of groups of the first hoisting points form concentric circles on the steel lining module 1, differences between radii of any two adjacent concentric circles are equal, and distances between two adjacent first hoisting points 103 in the same group of first hoisting points are the same. Distances between two adjacent first hoisting points 103 are the same. Further, the plurality of groups of first hoisting points are provided on the bottom plate 10, and at least one group of first hoisting points 103 is provided on a top portion of the second truncated cone 40. Furthermore, seven to nine groups of first hoisting point are provided on the bottom plate, and distance between groups of first hoisting points in the radial direction of the bottom plate is between 2m and 3m. In this embodiment, eight groups of first hoisting points 103 are provided on the bottom plate 10, and the distance between groups of first hoisting points in the radial direction of the bottom plate 10 is 2.46m. A total number of 225 first hoisting points 103 are provided on the bottom plate 10. One first hoisting point 103 is provided at the center of the bottom plate 10 of the steel lining, and eight first hoisting points 103 are uniformly distributed on a circle with a radius of 2.46 meters as a second group of first hoisting points 103. A third group, a fourth group, and a fifth group of first hoisting points are sequentially spaced outward by a distance of 2.46 meters, and 24 first hoisting points 103 are uniformly distributed on each group. On an outer side of the fifth group of hoisting points, a sixth group, a seventh group, and an eighth group of first hoisting points are sequentially spaced outward by a distance of 2.46 meters, and the three groups of first hoisting points each has 48 first hoisting points. 225 first hoisting points 103 are provided on the bottom plate 10 of the steel lining module 1 in the above distribution manner. In addition, 48 first hoisting points 103 are provided at an upper opening portion of the second truncated cone 40. As described above, the whole steel lining module 1 are provided with 9 groups and 273 first hoisting points 103.

### Example 3

In the hoisting stage, the arrangement of the first hoisting point 103 plays a decisive role in the deformation control during the overall hoisting process of the steel lining module 1, and the establishment of a set of analysis scheme for the arrangement of the hoisting points of the overall module is the core content of the construction technology of the overall module. Since the construction method for the steel lining module 1 in the present application is different from the conventional construction method, the present construction method relates to the overall hoisting of a thin-walled steel plate structure, and there is no mature standard and experience to refer to for the arrangement analysis method and stress calculation of the first hoisting point 103, and the design can only be carried out according to the structural characteristics of the overall module and the actual hoisting conditions. Therefore, after the scheme of the first hoisting point 103 is preliminarily arranged, the reliability of the overall design scheme needs to be verified.

The steps and structures of this embodiment are substantially the same as those of the above two embodiments, and the differences are as follows:

In the embodiment, the arranging the first hoisting point on the steel lining module further includes a verification step: simulating stresses of the first hoisting points on the steel lining module 1 during a hoisting process through finite element analysis to determine a stress and a strain of the steel lining module 1, so as to verify whether stresses and strains of the first hoisting points 103 satisfy a preset condition, thereby determining whether a position arrangement of the first hoisting points is reasonable. The stress and strain of the steel lining module 1 during the hoisting process are simulated and calculated, so as to determine whether plastic deformation will occur at each first hoisting point 103, so as to verify the rationality of the arrangement of the first hoisting points 103, thereby improving the reliability of the whole hoisting process of the steel lining module 1.

Specifically, simulating the stress of the first hoisting points during the hoisting process through finite element analysis to determine the stress and strain of the steel lining module includes:

Simulating the stresses of the first hoisting points under a first hoisting condition and a second hoisting condition through finite element analysis. In the first hoisting condition, the first hoisting points on the steel lining module are subjected to the same stress. In the second hoisting condition, the first hoisting points on the steel lining module has a maximum-stress hoisting point and a minimum-stress hoisting point. A stress of the maximum-stress hoisting point is less than or equal to 10% of the stress of the first hoisting point in the first condition, and a stress of the minimum-stress hoisting point is greater than or equal to 10% of the stress of the first hoisting point in the first condition. According to the stresses of the first hoisting point under the first hoisting condition and the second hoisting condition, the stress and strain of the steel lining module under the two hoisting conditions are determined.

In this embodiment, the hoisting tool 100 is provided with 12 hoisting points connected to the hoisting apparatus 120, the tensile force of the 6 hoisting points with greater stress among the 12 hoisting points is increased by 10%, and the tensile force of the 6 hoisting points with lesser stress is decreased by 10%. In the second condition, the stress of the hoisting points on the hoisting tool 100 is uneven.

Further, determining the stress and strain of the steel lining module under the two hoisting conditions according to the stresses of the first hoisting points under the first hoisting condition and the second hoisting condition includes: determining the stress and the strain of the steel lining module according to the stresses of the first hoisting points on the steel lining module and a wind load, a dynamic load coefficient and an unbalance coefficient of the steel lining module.

Specifically, the wind load is calculated by the following steps: obtaining the wind load of the steel lining module according to preset parameters of the steel lining module. The preset parameters include a height of the steel lining module, a diameter of the steel lining module, a maximum hoisting value of the steel lining module, and a wind speed and a wind coefficient of an environment where the steel lining module is located. In this embodiment, when calculating the wind load, the following parameters, including a module height of 3.395m, a module diameter of 43.2m, a maximum hoisting height of 60m, a verification wind speed of 10.8m/s, and a wind coefficient of 1.2, are input according to the structure of the steel lining module 1 to calculate the wind load. Based on the above parameters, the wind load at the highest point is 11222N.

Furthermore, the stress and strain of the steel lining module are calculated after the wind load is calculated, and a value of the wind load, a dynamic load coefficient, and an unbalance coefficient are input when the stress and strain are calculated. The stress and strain of the steel lining module are calculated according to the above parameters. In this embodiment, the value of the wind load is calculated in the above manner, a value of the dynamic load coefficient is 1.05, and a value of the unbalance coefficient is 1.2. The dynamic load coefficient and the unbalance coefficient are self-weight load coefficients, and the stress and the displacement of the steel lining module 1 are calculated by inputting the above parameters.

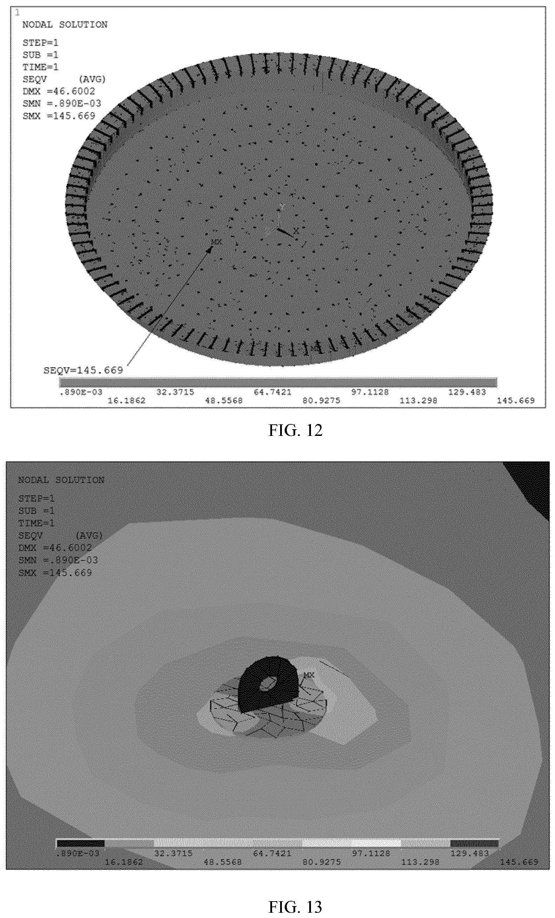

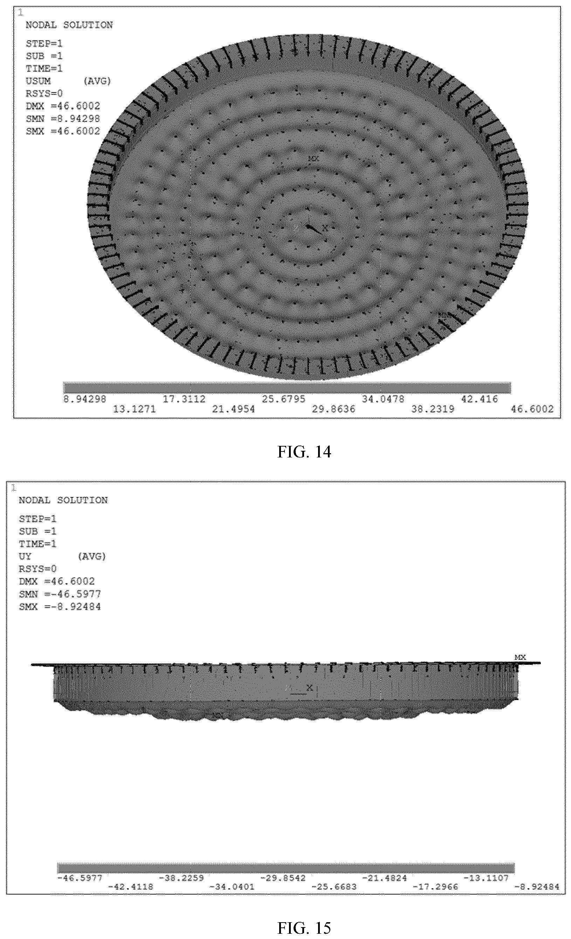

Specifically, after the above loads are applied, the stress and displacement of the module are calculated respectively according to the two conditions, and the specific analysis results are shown in FIGs. 12 to 15.

It can be seen from the calculation results and the finite element model analysis that during the hoisting of the steel lining module 1, a maximum stress of 145.7 Mpa occurs at an edge of the first hoisting point 103, and the maximum stress does not exceed an allowable stress of 179 Mpa of the steel lining material P265GH. A maximum displacement of a position of the steel lining module 1 is between the first hoisting points 103 of the third group and the fourth group, the maximum displacement is 46.6 mm, and the deformation is elastic deformation, which satisfies the hoisting requirements. The hoisting point arrangement scheme is reasonable.

### Example 4

For the calculation of the hoisting deformation of the steel lining module 1 in the form of a thin-walled steel plate, the finite element model analysis and calculation in example 3 can only be assumed according to the overall structural form of the steel lining module 1 and the hoisting condition. Therefore, whether the calculation results of the finite element model analysis can simulate the actual stress and deformation of the whole steel lining module 1 during the hoisting process needs to be verified through simulation test.

The steps and structures of this embodiment are substantially the same as those of the above three examples, and the differences are as follows:

In this embodiment, after the verification step, a simulated hoisting test is performed to verify the reliability of the result of the finite element analysis. It can be seen from example 3 that the position where the maximum deformation of the bottom plate 10 of the steel lining module 1 is located between the first hoisting points 103 of the third group and the fourth group. Therefore, during the simulated hoisting test, the first hoisting point 103 with the maximum stress in an area of the first hoisting points 103 of the third group and the fourth group is selected to verify the stress and strain of the bottom plate 10 at the most unfavorable section.

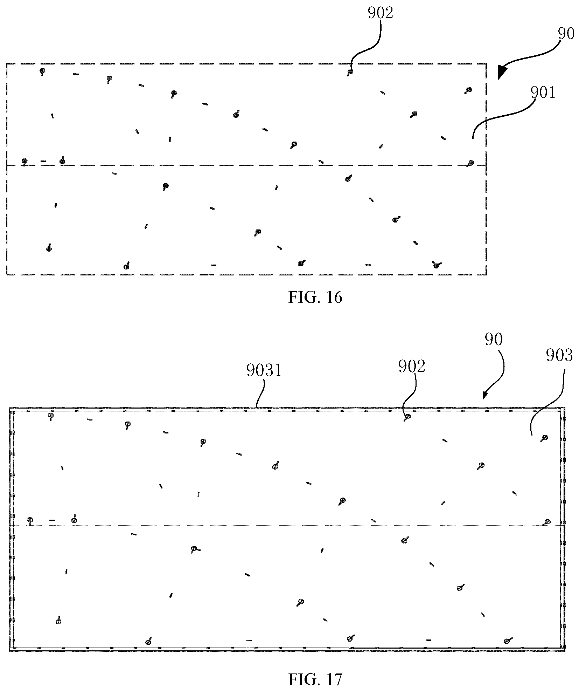

Further, a position of a point to be detected is set on the first hoisting point 103 with the maximum deformation after the finite element analysis. Since an edge constraint condition of an intercepted simulated workpiece 90 is not consistent with an actual hoisting condition of the steel lining module 1, in this embodiment, two kinds of simulated test workpieces are respectively manufactured for test verification, one simulated workpiece 90 is provided without a frame and an edge constraint, and the other simulated workpiece 90 is provided with a frame and an edge constraint. Specifically, the simulated workpiece 90 includes a first simulated workpiece 901 and a second simulated workpiece 903. The first simulated workpiece 901 is a rectangular steel plate having a length of about 11.5 meters, a width of about 5.89 meters, and a thickness of 6 mm. The second simulated workpiece 903 is a rectangular steel plate having a length of about 11.5 meters, a width of about 5.89 meters, and a thickness of 6 mm. A peripheral edge of the second simulated workpiece 903 is provided with a frame 9031, and the frame 9031 is made of angle steel, which is welded to the steel plate. The first simulated workpiece 901 and the second simulated workpiece 903 are both provided with 38 points 902 to be detected. A distribution of the points 902 to be detected is consistent with that of the first hoisting point 103 having the maximum stress on the bottom plate 10, and as shown in FIG. 16 and FIG. 17, the distribution of the points 902 to be detected on the first simulated workpiece 901 is consistent with that of the second simulated workpiece 903.

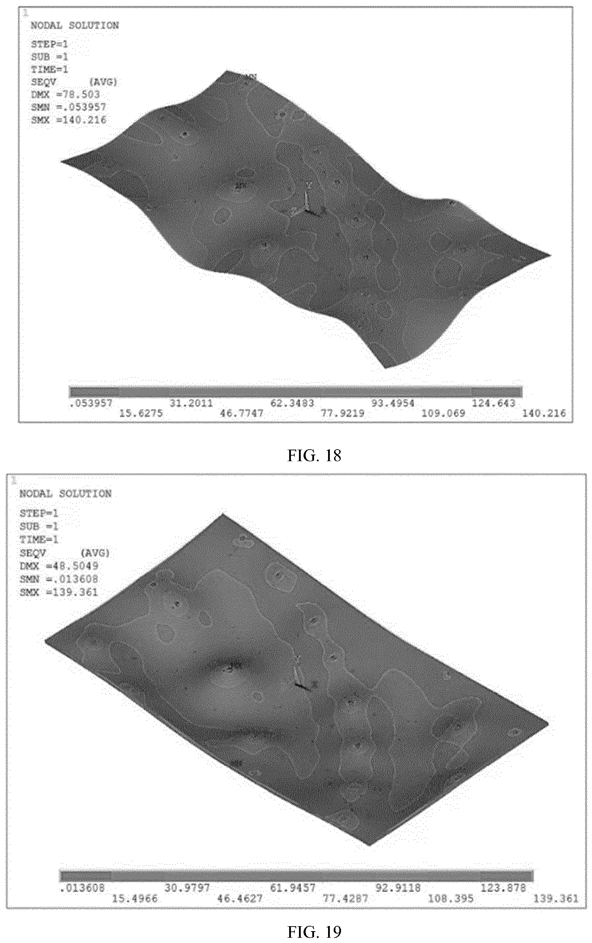

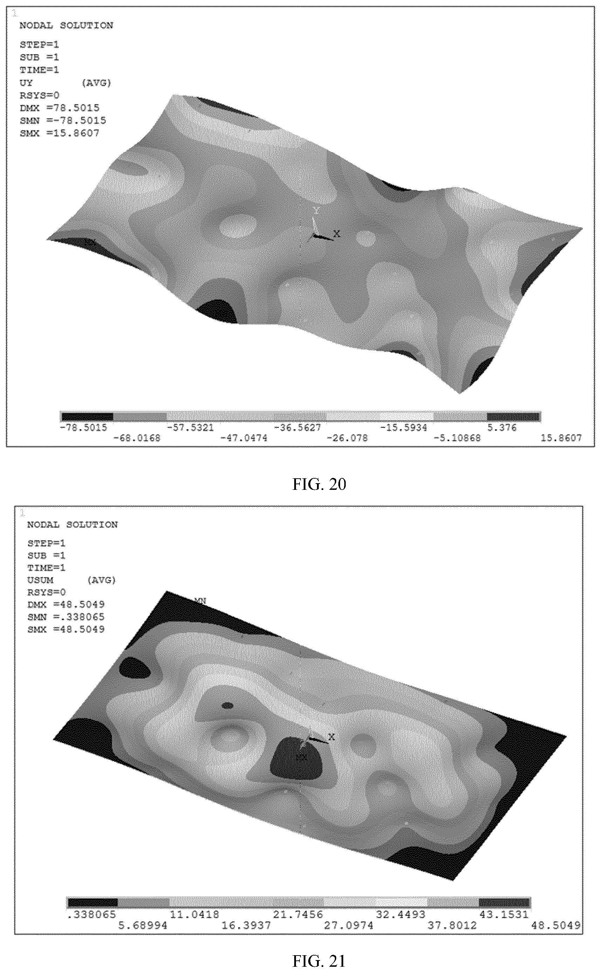

After the points to be detected on the first simulated workpiece 901 and the second simulated workpiece 903 are arranged, the stress and strain on the simulated workpieces are calculated by finite element modeling in the same way as the analysis method of the steel lining module 1. Specific analysis results are shown in FIG. 18 to FIG. 21.

According to the above finite element calculation results of the simulated workpieces, it can be seen that a position where the maximum stress is generated is at an edge of the hoisting lug of the first hoisting point 103, and a position where the maximum strain is generated is located between two first hoisting points 103. Therefore, during simulation test, strain gauges are adhered at positions on the simulated workpieces where the stress and strain are large, and 38 points to be detected are arranged on each simulated workpiece. The strain gauges are connected to a collector through wires, the wire on each strain gauge is clearly marked with a serial number, and the collector is connected to a computer to collect and store strains at all points to be detected.

Specifically, the simulated hoisting test includes the following steps: preparing a simulated workpiece and adhering a strain gauge at a specified position; checking a flatness of the simulated workpiece, measuring coordinates of a point to be detected before hoisting, and zeroing the strain gauge; hoisting the simulated workpiece, maintaining a prohibited state for not less than 10 minutes when a distance between the simulated workpiece and a platform ranges from 0.1m to 0.5m, in this embodiment, maintaining the prohibited state for 10 minutes, measuring the coordinates of the point to be detected, and continuously collecting data of the strain gauge; lowering the simulated workpiece onto the platform and ending data acquisition of the strain gauge, and checking the flatness of the simulated workpiece again.

The strain gauge enables the computer to automatically and continuously collect strain data and calculate stress values from the strain. The test shows that the strain fluctuates greatly in the initial stage and the last time period, and the strain is relatively stable in the middle time period, which is also consistent with the characteristics of the hoisting process. During data analysis, an average value of the stress in the first 10 minutes is taken as the stress value in the stable state.

Under the first simulated workpiece 901, i.e., the unconstrained condition, a peak stress of the first simulated workpiece 901 during the hoisting process is 143.66 Mpa, and the maximum stress in the stable state is 131.98 Mpa, which is substantially consistent with a theoretical calculated stress of 140 Mpa. A measured displacement value is 44.1 mm, and a theoretical calculated value of the displacement is 78.5 mm. A deformation trend of the bottom plate 10 in the simulation test is substantially consistent with that in the theoretical calculation.

Under the second simulated workpiece 903, i.e. the condition with angle steel constraint, a peak stress of the second simulated workpiece 903 during the hoisting process is 133.12 Mpa, and the maximum stress in the stable state is 121.71 Mpa, which is substantially consistent with a theoretical maximum stress of 133.9 Mpa. A measured value of a displacement is 38.6mm, and a theoretical calculated value of the displacement is 48.2mm. A deformation trend of the bottom plate 10 in the simulation test is substantially consistent with that in the theoretical calculation.

It can be seen from the above that the peak stresses of the two conditions does not exceed an allowable stress of 179 Mpa, and the steel plate is kept within an elastic deformation range during the simulated hoisting process without plastic deformation.

In addition, in addition to stress and strain data collection, the flatness of the same points to be tested were checked before hoisting and after hoisting to the position.

In this embodiment, a measuring rod of 2m is used for measurement, and data of 18 points to be detected are collected. The flatness of each point to be detected before and after hoisting is less than 20mm/2m, and the maximum change of the flatness before and after hoisting is 3mm. After hoisting, the bottom plate 10 can be well restored without obvious deformation, which satisfies the hoisting requirements.

According to the above analysis, the measured stress in the simulation test is substantially consistent with the finite element calculation, the measured strain is substantially consistent with the deformation trend calculated by the finite element calculation, and the finite element calculation and analysis method is substantially feasible.

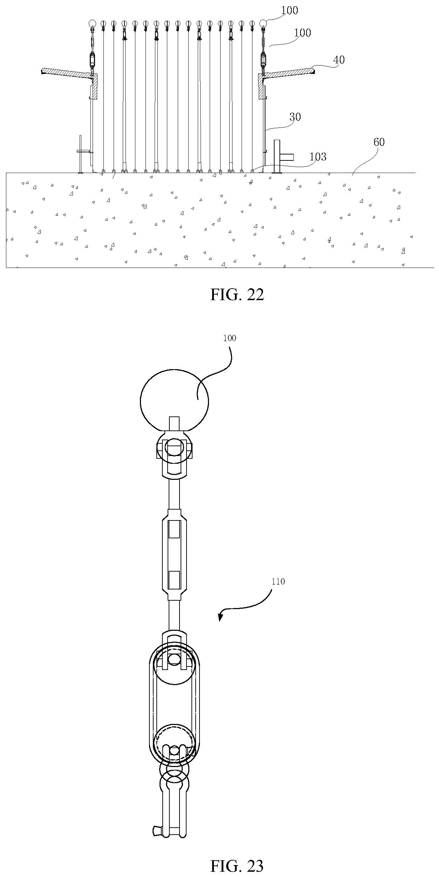

Further, in this embodiment, step S3 is shown in FIG. 22 and FIG. 23.

The first hoisting point 103 is connected to the hoisting tool 100 through a first sling 110. The first sling 110 includes a first turnbuckle, a rope loop, and a first shackle that are sequentially connected. The first turnbuckle is connected to the hoisting tool 100, and the first shackle is connected to the first hoisting point 103. The hoisting tool 100 is connected to the hoisting apparatus 120 through a second sling. The second sling includes a hook, a rope, a second shackle, and a second turnbuckle that are sequentially connected. The hook is connected to the hoisting apparatus 120, and the second turnbuckle is connected to the hoisting tool 100.

Since there are a large number of first hoisting points 103 on the steel lining module 1, it is necessary to ensure that each first hoisting point 103 is stressed evenly when being connected to the first sling module **110,** so as to ensure that the steel lining module 1 is stressed evenly during hoisting, thereby reducing the risk of deformation. Therefore, in this embodiment, after the steel lining module 1 is assembled, 541 points to be detected are arranged on the steel lining module **1,** and a distance between two adjacent points to be detected is about 1.5m. The elevation of each point to be detected and a flatness of an area between the adjacent points to be detected are then measured. A measured elevation range of the bottom plate 10 is between - 7.4mm and 43.4mm. A theoretical adjustment length value of the first sling 110 is calculated by actual data of the measured elevation and flatness, and an on-site verification is performed by adjusting the tightness of the first turnbuckle and using a digital electronic torque wrench. If a deviation length of the elevation exceeds an adjustable length of the first turnbuckle, it is necessary to adjust the length of the first sling 110 corresponding to a position of the first hoisting point 103, so as to ensure that the first sling 110 is stressed evenly within the adjustable range on site, and to prevent the situation that a large deformation is caused by the stress concentration at the position of a single first hoisting point 103.

### Example 5

The embodiment provides a hoisting tool 100, which is used in the construction of the steel lining module 1 as described above. All the first hoisting points 103 on the steel lining module 1 are connected to the hoisting tool 100, and the hoisting tool 100 is connected to the hoisting apparatus 120.

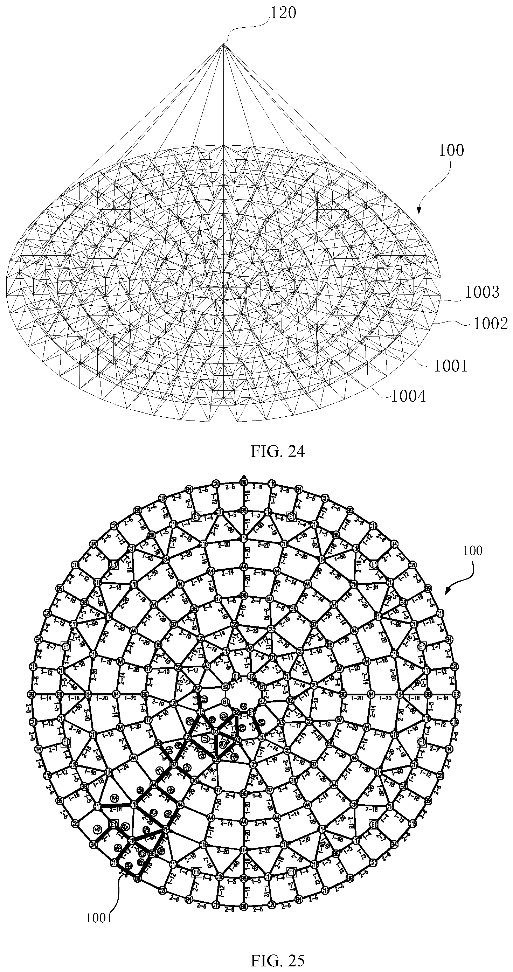

As shown in FIG. 24 and FIG. 25, the hoisting tool 100 provided in this embodiment is connected to all the first hoisting points 103 on the steel lining module 1, which facilitates the connection with the hoisting apparatus 120 on the one hand, and is conducive to improving the hoisting reliability and reducing the risk of deformation of the steel lining module 1 on the other hand.

Specifically, as shown in FIG. 24 and FIG. 25, the hoisting tool 100 includes a hoisting body, a plurality of second hoisting points, and a plurality of third hoisting points. The plurality of second hoisting points are provided on one side of the hoisting body and are configured to be connected to the hoisting apparatus 120. The plurality of third hoisting points are provided on the other side of the hoisting body. The plurality of third hoisting points correspond to the first hoisting points 103 on the steel lining module 1, and the third hoisting points are configured to be connected to the first hoisting points 103. A structure of the hoisting body is not limited, as long as the second hoisting point and the third hoisting point can be provided on an upper surface and a lower surface of the hoisting body. Structures of the second hoisting point and the third hoisting point are not limited, which may be hoisting lugs welded to the hoisting body or detachable hoisting lugs.

Further, the hoisting body includes a plurality of first connecting rods 1001, a plurality of second connecting rods 1002, and a plurality of support rods 1003. The first connecting rods 1001, the second connecting rods 1002, and the support rods 1003 are all rod-shaped structures and are made of Q235B steel. The plurality of first connecting rods 1001 are sequentially connected end to end to form a circular first connecting frame, and a plurality of first connecting frames are spaced apart and concentrically arranged in the same plane. The plurality of second connecting rods 1002 are sequentially connected end to end to form a circular second connecting frame, a plurality of second connecting frames are spaced apart and concentrically arranged in another same plane, and the first connecting rods 1001 and the second connecting rods 1002 are spaced apart. The two ends of each support rod 1003 are detachably connected to ends of the first connecting rod 1001 on two adjacent first connecting frames, respectively, so as to realize the connection between the two adjacent first connecting frames. The two ends of the support rod 1003 are detachably connected to ends of the second connecting rod 1002 on two adjacent second connecting frames, respectively, and similarly, the connection between the two adjacent second connecting frames is realized in this way. The two ends of the support rod 1003 are detachably connected to the ends of the first connecting rod 1001 and the second connecting rod 1002 respectively, so that the connection between the first connecting frame and the second connecting frame can be realized, and the first connecting frame and the second connecting frame are spaced apart.

Further, as shown in FIG. 25, the hoisting tool 100 further includes a plurality of connecting members, and the connecting member are provided with a plurality of connecting holes. The plurality of connecting holes satisfy at least one of the following conditions: two first connecting rods 1001 are detachably connected in two connecting holes on the same connecting member, respectively, two second connecting rods 1002 are detachably connected in two connecting holes on the same connecting member, the first connecting rod 1001 and the support rod 1003 are detachably connected in two connecting holes on the same connecting member, respectively, and the second connecting rod 1002 and the support rod 1003 are detachably connected in two connecting holes on the same connecting member, respectively. Specifically, the connecting member may be a three-dimensional structure having a spherical shape or a shape similar to a polyhedron, connecting holes are formed on different surfaces of the three-dimensional structure. Internal threads are formed in the connecting holes, and external threads are formed at two ends of the first connecting rod 1001, two ends of the second connecting rod 1002 and two ends of the support rod 1003 and are threadedly connected to the connecting holes on the connecting members. In this embodiment, the connecting member may be a bolt ball, and certainly, other structures may also be used. The bolt ball is provided with bolt holes corresponding to directions of the rods and is configured to be connected to the three rods. A lower portion of the bolt ball is provided with a bolt hole which serves as the third hoisting point of the steel lining module 1 and is connected to the first hoisting point 103 of the steel lining module 1 through an eye screw, a steel wire rope, etc. The first connecting rod 1001, the second connecting rod 1002, and the support rod 1003 are assembled to the bolt ball to form a hoisting body of a grid structure, and an upper portion of the hoisting body is connected to the steel wire rope and a crane through the hoisting lug.

In this embodiment, 12 second hoisting points are provided, and the 12 second hoisting points are provided on the first connecting frame. The third hoisting points are provided on the second connecting frame. The third hoisting points on the second connecting frame are in one-to-one correspondence with the first hoisting points 103 on the bottom plate 10. Alternatively, one second hoisting point on the second connecting frame corresponds to two second hoisting points. That is, in this embodiment, 12 second hoisting points are uniformly arranged on the same first connecting frame on an upper surface of the tooling body. The second hoisting points are configured to be connected to the hoisting apparatus 120, i.e., a main hook of a large crane. The third hoisting points are arranged on different second connecting frames on a lower surface of the tooling body. Specifically, the third hoisting points are arranged as follows. One third hoisting point is arranged in a center of the tooling body, 8 third hoisting points are arranged on the second connecting frame which is relatively adjacent to the center, and 12, 24, 24, 24, 48, 48, and 48 third hoisting points are respectively arranged on the 8 third connecting frames that are arranged outwards in sequence along a radial direction of the tooling body. The 12 third hoisting points on the third connecting frame of a second circle of the tooling body correspond to the 24 first hoisting points 103 of the second group of the bottom plate 10. The 24 third hoisting points on the third connecting frame of a fifth circle of the tooling body correspond to the 48 first hoisting points 103 of a fifth group of the bottom plate 10. That is, one third hoisting point on each the third connecting frame of the second circle and the fifth circle corresponds to corresponding two first hoisting points 103 on the bottom plate 10. Specifically, the third hoisting point on the hoisting tool 100 may be divided into two hoisting points by a balance beam and correspond to the first hoisting point 103 on the bottom plate 10.

In an embodiment, the hoisting body is configured to be circular or ring-shaped. A radius of a circular grid is about 19.706m, a height of a lifting tool is about 2.2m, and a total weight thereof is about 63t. Certainly, the hoisting tool 100 can also be configured to be in a detachable and combinable structure, so as to realize that one hoisting tool 100 can satisfy the requirements of two different usage conditions. Specifically, the hoisting body is detachably connected through the first connecting rod 1001, the second connecting rod 1002, and the support rod 1003 through the connecting members, i.e., bolt balls. When a circular hoisting tool 100 is required for hoisting, the hoisting body is configured to be circular. When a ring-shaped hoisting tool 100 is required for hoisting, the first connecting rod 1001, the second connecting rod 1002, the support rod 1003 in the center of the circular hoisting body can be removed from the bolt balls, so as to change the circular hoisting tool 100 into a ring-shaped hoisting tool 100.

After the hoisting tool 100 is designed, the reliability of the hoisting tool 100 needs to be verified. Specifically, the verification method of the hoisting tool 100 is the same as the finite element modeling calculation method of the steel lining module 1. In addition, the hoisting process simulation of the hoisting tool 100 also uses the same two tools used in the steel lining module 1. Meanwhile, internal forces of the first connecting rod 1001, the second connecting rod 1002, and the support rod 1003 of the hoisting tool 100 are also verified, and the strength and stability of the components of the hoisting tool 100 satisfy the requirements.

In order to verify the actual usage performance of the hoisting tool 100, a load test of the hoisting tool 100 needs to be performed before the formal hoisting. The load test of the hoisting tool 100 not only adopts the conventional visual inspection and deformation observation, strain gauges are also adhered on any one or more of the first connecting rod 1001, the second connecting rod 1002, and the support rod 1003 of the hoisting tool 100 that are subjected to relatively large stress, so as to detect the actual stress and strain values, and check whether the overall stress performance and bearing capacity of the hoisting tool 100 satisfy the overall hoisting requirements of the steel lining module 1. The test can improve the reliability of the hoisting of the hoisting tool 100 and the reliability of the whole hoisting process.

The specific test method is as follows: the lifting tool of hoisting tool 100 is hoisted onto a temporary support and the strain gauges are adhered on the lifting tool, and the strain gauge is connected to the collector after being checked. When a main steel wire rope connected to the hoisting tool 100 is hoisted and the hoisting tool 100 is separated from the temporary support, the strain gauge are zeroed, and 1.25 times of the rated load is loaded for hoisting, and then the hoisting tool 100 is lowered onto the temporary support, and the above process is repeated for three times.

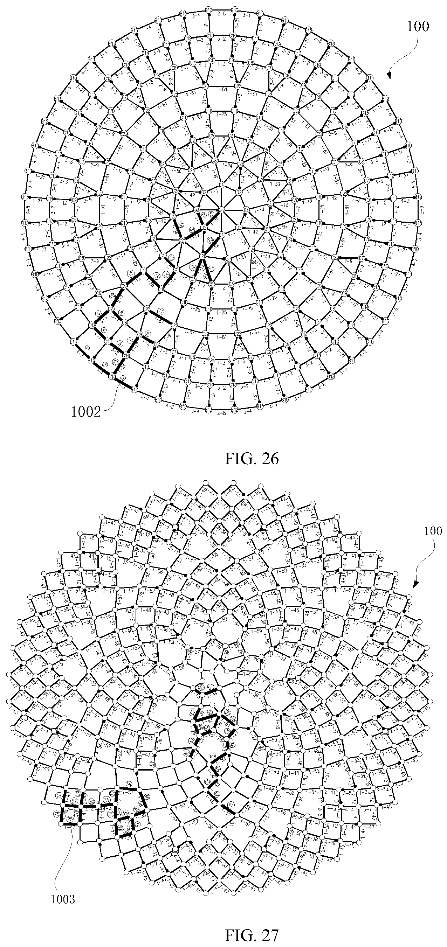

A total number of 109 stress points to be detected are provided on the hoisting tool 100, including 24 stress points to be detected on the second hoisting lug, 28 stress points to be detected on the first connecting rod 1001, 34 stress points to be detected on the support rod 1003, and 23 stress points to be detected on the second connecting rod 1001. The specific locations are shown in FIG. 26 to FIG. 28. The points to be detected are marked, and the numbers of the points to be detected are represented by numbers 1 to 109.

After testing, it can be learned that the maximum stress value in all the points to be tested is 38.42 N/mm², while the first connecting rod 1001, the second connecting rod 1002, and the support rod 1003 of the hoisting tool 100 are made of Q235B steel, and the ultimate strength value of Q235B is 215 N/mm². The allowable stress should be 70% of the design strength value of the steel, that is, 150.05 N/mm², while the maximum stress value of 38.42 N/mm² received by the hoisting tool 100 provided in this embodiment during the hoisting process is much smaller than the allowable stress value. Therefore, it can be seen that a stress detection value of the hoisting tool 100 during the test does not exceed a design allowable stress value, and the hoisting tool 100 is reliable and can be used in the hoisting of the steel lining module 1.

### Example 6

The steps and structures of this embodiment are substantially the same as those of the above embodiments, and the differences are as follows:

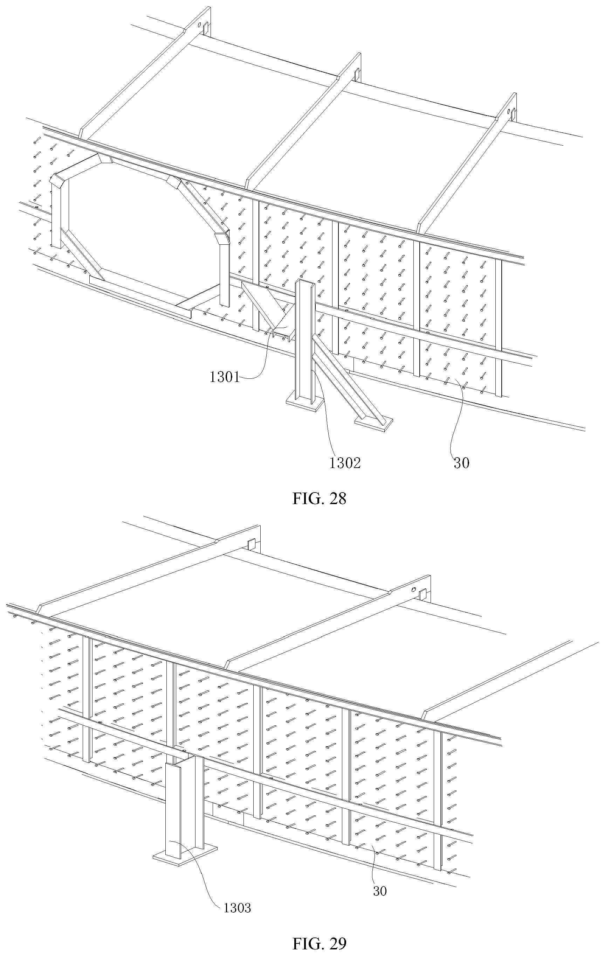

Since the overall size of the steel lining module 1 is large, it is difficult to hoist the whole steel lining module 1 in place. In order to solve this technical problem, as shown in FIG. 29, this embodiment provides a limiting tool 130 configured to limit the steel lining module in step S4 of the above construction method for the steel lining module. The limiting tool 130 provided by the technical scheme is used for auxiliary positioning, so that the steel lining module can be integrally hoisted and positioned accurately. On the one hand, the positioning accuracy is improved, and on the other hand, the hoisting and positioning efficiency is also improved.

Specifically, the limiting tool 130 includes a circumferential limiting member 1301 and an axial limiting member. One end of the circumferential limiting member 1301 is fixed on an outer side surface of the first truncated cone 30, and the other end of the circumferential limiting member 1301 extends in a direction away from the first truncated cone 30. One end of the axial limiting member is fixed on the ground in the nuclear island building, and the other end of the axial limiting member extends upwards. Opposite surfaces of the circumferential limiting member 1301 and the axial limiting member are in contact with each other to determine the position of the steel lining module 1. Circumferential limiting members 1301 are provided on the outer side wall of the first truncated cone 30 of the steel lining module 1 beside a position where a pipeline is provided. One circumferential limiting member 1301 is provided at each position where the pipeline is provided, and five circumferential limiting members 1301 are provided in the circumferential direction of the whole steel lining module 1. On the ground in the nuclear island building, twelve radial limiting members 1302 are uniformly arranged along the circumferential direction of the first truncated cone 30. The circumferential limiting member 1301 is configured to adjust an angle of the steel lining module 1. The radial limiting member 1302 is configured to adjust a radial position of the steel lining module 1. During the hoisting process, the position of the steel lining module 1 is adjusted by a chain block. Specifically, one end of the chain block is fixed to a channel steel around a foundation pit of the nuclear island building, and the other end of the chain block is connected to the circumferential limiting member 1301. The position of the steel lining module 1 is adjusted by the chain block. When two opposite surfaces of the circumferential limiting member 1301 and the radial limiting member 1302 are attached, the angle and radial position of the steel lining module 1 are appropriate. The embodiment further provides a guide limiting member 1303. One end of the guide limiting member 1303 is fixed on a side surface of the first truncated cone 30, and the other end of the guide limiting member 1303 extends downward to be coplanar with a bottom surface of the bottom plate 10. The guide limiting member 1303 serve as a guide limiter when the steel lining module 1 is hoisted.

Specifically, the structure of the circumferential limiting member 1301 is not limited, and may be a trapezoidal structure. One bottom surface of the trapezoidal structure is welded to the first truncated cone 30, and the other bottom surface is configured to be attached to the radial limiting member 1302. It may also be formed by welding two angle steels that are perpendicular to each other, one end of one angle steel is welded to the first truncated cone 30, and a side of the other angle steel is configured to be attached to the radial limiting member 1302. The radial limiting member 1302 may also be a trapezoidal structure, one bottom surface of the trapezoidal structure is fixed to the bottom surface of the nuclear island building, the other end of the trapezoidal structure extends upwards, and a side surface of the trapezoidal structure is configured to abut against the circumferential limiting member 1301. In this embodiment, the radial limiting member 1302 is formed by welding two channel steels, one end of one channel steel is inclined and welded to the other vertical channel steel, and the bottom surfaces of the two channel steels are coplanar with each other and fixed to a nuclear island building ground 60. The steel lining module 1 is integrally hoisted and accurately positioned through the limiting tool 130 with the above structure. Through the limiting tool 130 designed on site, the steel lining module 1 is accurately positioned, a radial deviation is within 2cm, and an angular deviation is within 2cm, which satisfies the design requirements.

The limiting tool further includes a support column, one end of which is fixed on the ground in the nuclear island reactor building, and the other end of the support column extends towards the second truncated cone and abuts against an edge of the second truncated cone. The support column is configured to prevent deformation caused by the second truncated cone being suspended after the steel lining module is mounted in the containment.

According to the present application, the bottom plate 10 of the steel lining and the first truncated cone 30 and the second truncated cone 40 are integrally modularized, so that the integral assembly of the modules on the ground is realized, and the construction period of the critical path of the physical construction is effectively shortened by more than 2 months. In addition, the welding operation environment of the bottom plate 10 is improved, the primary welding qualification rate is greatly improved, the crossing and high-altitude operations are reduced, the safety quality level of construction management is significantly improved, and finally the flatness of the bottom plate 10 is qualified in the primary acceptance. A set of standard construction methods for thin-wall structural modules is established, and the core capability of module construction is mastered, which greatly improved the constructability of the pressurized water reactor nuclear power plant.

The above-mentioned embodiments do not constitute a limitation on the protection scope of the technical solution. Any modifications, equivalent replacements and improvements made within the spirit and principles of the above-mentioned embodiments shall be included within the protection scope of this technical solution.

The foregoing descriptions are merely specific embodiments of the present application, but are not intended to limit the protection scope of the present application. Any variation or replacement readily figured out by a person skilled in the art within the technical scope disclosed in the present application shall all fall within the protection scope of the present application. Therefore, the protection scope of the present application shall be subject to the protection scope of the appended claims.

## Claims

1. A construction method for a steel lining module, the steel lining module comprising a bottom plate, a first truncated cone, and a second truncated cone that are sequentially connected, the method comprising the following steps of:
splicing the bottom plate, the first truncated cone, and the second truncated cone to form the steel lining module;
arranging first hoisting points on the steel lining module;
connecting the first hoisting points on the steel lining module to a hoisting tool, and connecting the hoisting tool to a hoisting apparatus; and
hoisting the steel lining module into a containment vessel in a nuclear island reactor building.

2. The construction method for the steel lining module according to claim 1, wherein the arranging the first hoisting points on the steel lining module comprises:
arranging a plurality of groups of first hoisting points sequentially from a center outwards along a radial direction of the steel lining module, wherein each group of first hoisting points comprises a plurality of first hoisting points spaced apart in a circumferential direction of the steel lining module.

3. The construction method for the steel lining module according to claim 2, wherein connecting lines of the first hoisting points in the plurality of groups of the first hoisting points form a plurality of concentric circles, the concentric circles and a distance between any two adjacent first hoisting points in a same group of the first hoisting points satisfy at least one of the following conditions: differences between radii of any two adjacent concentric circles are equal, and distances between any two adjacent first hoisting points in a same group of first hoisting points are the same.

4. The construction method for the steel lining module according to claim 2 or 3, wherein an edge of the bottom plate is welded to one end of the first truncated cone in an axial direction, the other end of the first truncated cone in the axial direction extends in a direction away from the bottom plate and is welded to the second truncated cone, and an edge of the second truncated cone away from the first truncated cone extends away from the first truncated cone in a radial direction of the first truncated cone;
the plurality of groups of the first hoisting points are provided on the bottom plate, and at least one group of the first hoisting points is provided on a top portion of the second truncated cone.

5. The construction method for the steel lining module according to claim 2, wherein the arranging the first hoisting points on the steel lining module further comprises a verification step of:
simulating stresses of the first hoisting points during a hoisting process through finite element analysis to determine a stress and a strain of the steel lining module, so as to verify whether stresses and strains of the first hoisting point satisfy a preset condition, thereby determining whether a position arrangement of the first hoisting points is reasonable.

6. The construction method for the steel lining module according to claim 5, wherein the simulating stresses of the first hoisting points during the hoisting process through finite element analysis to determine the stress and strain of the steel lining module comprises:
simulating the stresses of the first hoisting points under a first hoisting condition and a second hoisting condition through finite element analysis, wherein in the first hoisting condition, the first hoisting points on the steel lining module are subjected to a same stress, in the second hoisting condition, the first hoisting points on the steel lining module has a maximum-stress hoisting point and a minimum-stress hoisting point, a stress of the maximum-stress hoisting point is less than or equal to 10% of the stress of the first hoisting point in the first condition, and a stress of the minimum-stress hoisting point is greater than or equal to 10% of the stress of the first hoisting point in the first condition; and
determining the stress and the strain of the steel lining module under two hoisting conditions according to the stresses of the first hoisting points under the first hoisting condition and the second hoisting condition.

7. The construction method for the steel lining module according to claim 6, wherein the determining the stress and strain of the steel lining module under the two hoisting conditions according to the stresses of the first hoisting points under the first hoisting condition and the second hoisting condition comprises:
determining the stress and the strain of the steel lining module according to the stresses of the first hoisting points on the steel lining module and a wind load, a dynamic load coefficient and an unbalance coefficient of the steel lining module.

8. The construction method for the steel lining module according to claim 7, further comprising:
obtaining the wind load of the steel lining module according to preset parameters of the steel lining module, wherein the preset parameters comprise a height of the steel lining module, a diameter of the steel lining module, a maximum hoisting value of the steel lining module, and a wind speed and a wind coefficient of an environment where the steel lining module is located.

9. The construction method for the steel lining module according to claim 5, wherein after the verification step, the method further comprises:
preparing a simulated workpiece and adhering a strain gauge at a specified position;
checking a flatness of the simulated workpiece, measuring coordinates of a point to be detected before hoisting, and zeroing the strain gauge;
hoisting the simulated workpiece, maintaining a prohibited state for not less than 10 minutes when a distance between the simulated workpiece and a platform ranges from 0.1m to 0.5m, measuring the coordinates of the point to be detected, and continuously collecting data of the strain gauge; and
lowering the simulated workpiece onto the platform and ending data acquisition of the strain gauge, and checking the flatness of the simulated workpiece again.

10. The construction method for the steel lining module according to claim 9, wherein the simulated workpiece comprises:
a first simulated workpiece being a rectangular steel plate;
a second simulated workpiece being a rectangular steel plate, wherein a peripheral edge of the second simulated workpiece is provided with a limiting frame;
wherein a thicknesses of the first simulated workpiece and a thicknesses of the second simulated workpiece are consistent with a thickness of the bottom plate, a plurality of points to be detected are provided on both the first simulated workpiece and the second simulated workpiece, a number of the points to be detected on the first simulated workpiece is the same as a number of the points to be detected on second simulated workpiece, and a distribution of the points to be detected is consistent with a distribution of the first hoisting point having the maximum stress on the bottom plate.

11. The construction method for the steel lining module according to claim 1, wherein when the first hoisting points on the steel lining module are connected to the hoisting tool and the hoisting tool is connected to the hoisting apparatus,
the first hoisting point is connected to the hoisting tool through a first sling, the first sling comprises a first turnbuckle, a rope loop, and a first shackle that are sequentially connected, wherein the first turnbuckle is connected to the hoisting tool, and the first shackle is connected to the first hoisting point;
the hoisting tool is connected to the hoisting apparatus through a second sling, the second sling comprises a hook, a rope, a second shackle, and a second turnbuckle that are sequentially connected, wherein the hook is connected to the hoisting apparatus, and the second turnbuckle is connected to the hoisting tool.

12. A hoisting tool used in the construction method for the steel lining module according to any one of claims 1 to **11,** all of the first hoisting points on the steel lining module being connected to the hoisting tool, and the hoisting tool being connected to the hoisting apparatus.

13. The hoisting tool according to claim 12, wherein the hoisting tool comprises:
a hoisting body;
a plurality of second hoisting points provided on one side of the hoisting body and configured to be connected to the hoisting apparatus; and
a plurality of third hoisting points provided on the other side of the hoisting body, wherein the plurality of third hoisting points correspond to the first hoisting points on the steel lining module, and the third hoisting points are configured to be connected to the first hoisting points.

14. The hoisting tool according to claim 13, wherein the hoisting body comprises:
a plurality of first connecting rods, the plurality of first connecting rods being sequentially connected end to end to form a circular first connecting frame, and a plurality of first connecting frames being spaced apart and concentrically arranged in a same plane;
a plurality of second connecting rods, the plurality of second connecting rods being sequentially connected end to end to form a circular second connecting frame, a plurality of second connecting frames being spaced apart and concentrically arranged in another same plane, and the first connecting rods and the second connecting rods being spaced apart;
a plurality of support rods, wherein each support rod satisfies at least one of the following conditions:
two ends of the support rod are detachably connected to the ends of the first connecting rods on the two adjacent first connecting frames, respectively;
two ends of the support rod are detachably connected to ends of a second connecting rod on the two adjacent second connecting frames, respectively; and
two ends of the support rod are detachably connected to ends of the first connecting rod and the second connecting rod, respectively.

15. The hoisting tool according to claim 14, further comprising a plurality of connecting members, and the connecting members being provided with a plurality of connecting holes, wherein the plurality of connecting holes satisfy at least one of the following conditions:
two first connecting rods are detachably connected in two connecting holes on a same connecting member, respectively;
two second connecting rods are detachably connected in two connecting holes on a same connecting member, respectively;
the first connecting rod and the support rod are detachably connected in two connecting holes on a same connecting member, respectively; and
the second connecting rod and the support rod are detachably connected in two connecting holes on a same connecting member, respectively.

16. The hoisting tool according to claim 14, wherein at least twelve second hoisting points are provided, and the second hoisting points are provided on the first connecting frame;
the third hoisting points are arranged on the second connecting frame, and the third hoisting points satisfy at least one of the following conditions:
the third hoisting points on the second connecting frame are in one-to-one correspondence with the first hoisting points on the bottom plate; and
one third hoisting point on the second connecting frame corresponds to two second hoisting points.

17. A limiting tool configured to limit a steel lining module in the construction method for the steel lining module according to any one of claims 1 to 11.

18. The limiting tool according to claim 17, wherein the limiting tool comprises:
a circumferential limiting member, one end of the circumferential limiting member being fixed on an outer side surface of the first truncated cone, and the other end of the circumferential limiting member extending in a direction away from the first truncated cone; and
an axial limiting member, one end of the axial limiting member being fixed on a ground in a nuclear island building, and the other end of the axial limiting member extends upwards;
wherein opposite surfaces of the circumferential limiting member and the axial limiting member are in contact with each other to determine the position of the steel lining module.

19. The limiting tool according to claim 17, further comprising a support column, wherein one end of the support column is fixed on a ground in the nuclear island reactor building, and the other end of the support column extends towards the second truncated cone and abuts against an edge of the second truncated cone.
